# EUROPÄISCHE PATENTSCHRIFT

(11) **EP 2 528 811 B1**
(45) Veröffentlichungstag und Bekanntmachung des Hinweises auf die Patenterteilung: **03.04.2019**
(21) Anmeldenummer: 11702930.6
(22) Anmeldetag: 24.01.2011
(51) Int. Cl.: B64D 11/02, B64D 11/04, B64D 11/00, B64D 41/00

(54) **AUTARKES MONUMENT IN DER FLUGZEUG-DRUCKKABINE MIT DEZENTRALER BETRIEBSSTOFFVERSORGUNG UND EFFIZIENTER ENERGIEWANDLUNG**
SELF-SUFFICIENT MONUMENT IN THE AIRCRAFT PRESSURE CABIN HAVING A DECENTRALIZED OPERATING RESOURCE SUPPLY AND EFFICIENT ENERGY CONVERSION
ENSEMBLE AUTONOME DANS LA CABINE PRESSURISÉE D'UN AÉRONEF, DOUÉ D'UNE ALIMENTATION DÉCENTRALISÉE EN CARBURANTS ET D'UNE CONVERSION EFFICACE DE L'ÉNERGIE

(30) Priorität: 25.01.2010 DE 102010005695
(43) Veröffentlichungstag der Anmeldung: 05.12.2012
(73) Patentinhaber: Airbus Operations GmbH, 21129 Hamburg (DE)
(72) Erfinder: GOD, Ralf, 21129 Hamburg (DE); KURZ, Christian, 22765 (DE); WESTENBERGER, Andreas, 21614 Buxtehude (DE)
(74) Vertreter: LKGLOBAL Lorenz & Kopf PartG mbB Patentanwälte
(86) Internationale Anmeldenummer: PCT/EP2011/000275
(87) Internationale Veröffentlichungsnummer: WO 2011/089016

(56) Entgegenhaltungen:
- DE-A1-102006 002 882
- US-A1- 2005 158 041
- US-A1- 2007 110 861
- US-A1- 2007 111 066
- US-A1- 2008 127 411
- US-A1- 2008 178 609

## Beschreibung

Die Erfindung betrifft ein autarkes, sich selbst versorgendes und unterhaltendes Monument in einer Flugzeug-Druckkabine, welches dadurch dezentral mit den für den Betrieb erforderlichen Betriebsstoffen versorgt wird, dass diese in Betriebsstoffspeichern im Monument mitgeführt werden. Das autarke Monument kann sowohl im Passagierbereich als auch im Frachtraum installiert werden. Darüber hinaus betrifft die Erfindung ein Verfahren zur effizienten Energiewandlung innerhalb des autarken Monuments. Kennzeichnend für dieses Verfahren ist, dass die im Monument stattfindenden Energiewandlungsprozesse, ausgehend von den mitgeführten Betriebsstoffen, unter exergetischen, ökonomischen und ökologischen, das heißt unter exergo-ökonomischen und exergo-ökologischen Aspekten optimiert und aufeinander abgestimmt sind.

Exergo-ökonomisch bzw. exergo-ökologisch bedeutet eine Kombination aus ökonomischer bzw. ökologischer Betrachtung und Exergie-Analyse. Im Gegensatz zur klassischen Energieverbrauchsanalyse lässt sich durch die Exergie-Analyse ein System dahingehend optimieren, dass es in Bezug auf seine Prozessaufgabe einen minimalen Betriebsstoffverbrauch aufweist und im System vorhandene Energieformen optimal nutzt und wandelt.

Monumente sind integrale, in einer Flugzeug-Druckkabine eingebaute Großkomponenten. Zu diesen Monumenten zählen beispielsweise die Bordküchen, Ruheabteile der Flug- oder Kabinenbesatzung, Bar- und Empfangsbereiche, Einbauten für die Bordunterhaltung sowie Toiletten, Dusch- und Waschräume. Um eines dieser Monumente in der Kabine zu installieren, muss es bekanntermaßen mit einer Vorrichtung zur mechanischen Fixierung versehen sein. Diese erfolgt in der Regel an den Sitzschienen im Boden sowie an weiteren dafür vorgesehenen Befestigungspunkten im Flugzeugrumpf. Zur flexiblen Platzierung des Monuments ist diese Fixierung daher lösbar gestaltet, um eine schnelle und einfache Umrüstung der Kabine sicherzustellen (DE 202008003772 U1, DE 602005006280 T2).

Müssen dem Monument jedoch Betriebsstoffe zugeführt werden, so ist die Flexibilität bei dessen Platzierung in der Kabine stark limitiert, weil Versorgungsleitungen und Anschlüsse nicht uneingeschränkt flexibel geplant, installiert und mit dem Monument verbunden werden können. Ein bekannter Ansatz zur flexibleren Platzierung eines Monuments mit Betriebsstoffversorgung stellt beispielsweise eine Kettenvorrichtung zum Führen eines elektrischen Anschlusskabels dar (DE 102007003802 B4).

Es ist auch denkbar, dass ein Datenkabel über eine solche Kettenvorrichtung geführt werden kann. Die Verbindung eines Monuments mit Datenkabeln ist beispielsweise erforderlich, um dessen Funktionen über das Kabinennetzwerk steuern und parametrieren zu können und um Daten und Signale übertragen und mit anderen Systemen im Flugzeug austauschen zu können. Ein bekannter Ansatz für die Flexibilisierung der datentechnischen Anbindung eines Monuments stellt ein selbstkonfigurierendes Funknetzwerk in der Kabine dar (GB 2430118 A, WO 2005 120069 A2). Hierbei werden beispielsweise die Daten zwischen einer Passagier-Serviceeinheit (PSU) oder einem Router des Bordunterhaltungssystems und einer Passagiersitzgruppe kabellos übermittelt, was eine flexible und freie Konfigurierbarkeit von Sitzgruppen hinsichtlich der datentechnischen Verbindung ermöglicht.

US 2008/0127411 A1 beschreibt eine autonom betriebene Sanitäreinheit in einem Transportmittel. Die Sanitäreinheit hat ein Sanitärmodul und ein Versorgungssystem. Die Sanitäreinheit ist innerhalb einer Kabine eines Transportmittels flexibel positionierbar. Das Versorgungssystem ist innerhalb des Sanitärmoduls angeordnet.

US 2007/0110861 A1 beschreibt eine Vorrichtung für die Zubereitung von Mahlzeiten, welche insbesondere für die Nutzung in Flugzeugkabinen geeignet ist. Die Vorrichtung weist eine Mahlzeitenzubereitungseinheit und eine Versorgungseinheit auf. Die Versorgungseinheit weist eine Brennstoffzelle auf und ist so konfiguriert, um die Mahlzeitenzubereitungseinheit mit durch die Brennstoffzelle produziertem Wasser zu versorgen.

US 2007/0111066 A1 beschreibt eine Badeanlage, welche insbesondere für die Nutzung in Flugzeugkabinen geeignet ist. Die Vorrichtung weist eine Badeeinheit und eine Versorgungseinheit auf. Die Versorgungseinheit weist eine Brennstoffzelle auf und ist so konfiguriert, um die Badeeinheit mit durch die Brennstoffzelle produziertem Wasser zu versorgen.

In der Kabine eines modernen Passagierflugzeugs stellt elektrische Energie einen wichtigen und daher bevorzugten Betriebsstoff zur Versorgung von Monumenten dar, da er einfach erzeugt, nahezu verlustfrei verteilt, und praktisch in jede andere Energieform umgewandelt werden kann. Die Erzeugung elektrischer Energie erfolgt am Flugzeugtriebwerk mittels eines Generators durch die Umwandlung von Wellenleistung in elektrischen Strom. Der Strom wird anschließend vom Generator über einen zentralen Hauptverteiler und ein Verteilernetz zu den Monumenten in der Kabine transportiert.

Zur Nutzung der bei elektrischer Energie als Betriebsstoff bekannten Vorteile, nämlich der nahezu verlustfreien Verteilung und der einfachen Umwandlungsmöglichkeiten in andere Energieformen, ist im Flugzeug für diesen Betriebsstoff heute ein komplexes, von zentraler Stelle ausgehendes und hierarchisch aufgebautes Verteilernetz erforderlich. Die Verteilung im Netz erfolgt kabelgebunden und ist daher nur wenig flexibel. Zusätzlich verursacht ein derart aufgebautes Verteilernetz ein hohes Kabelgewicht und einen hohen Installationsaufwand.

Ein bekannter Ansatz, welcher diesen negativen Effekten entgegenwirkt, ist beispielsweise die Nutzung der Sitzschienen im Boden zur Stromversorgung eines daran befestigten Monuments (DE 102004039189 A1). Hierbei wird durch einen Stromleiter ein elektrisches Potential in die Sitzschiene eingebracht, welches an einer beliebigen Stelle durch einen zweiten Stromleiter von der Sitzschiene abgegriffen werden kann. Mit diesem Ansatz können jedoch keine beliebig großen Leistungen übertragen werden und das Verteilernetz geht nach wie vor von einer zentralen Stelle aus.

Elektrische Energie kann auch kontaktlos zu Leistungsabnehmern übertragen werden, was jedoch ebenfalls keinen wesentlichen Vorteil gegenüber den bekannten Ansätzen mit Kettenvorrichtung (DE 102007003802 B4) oder Sitzschiene (DE 102004039189 A1) darstellt, da die kontaktlose Übertragungsstrecke nur einige Zentimeter betragen kann. Deshalb kann keine vorteilhafte Flexibilisierung der Betriebsstoffversorgung erzielt werden und das Verteilernetz muss auch in diesem Fall von zentraler Stelle ausgehen und hierarchisch organisiert sein.

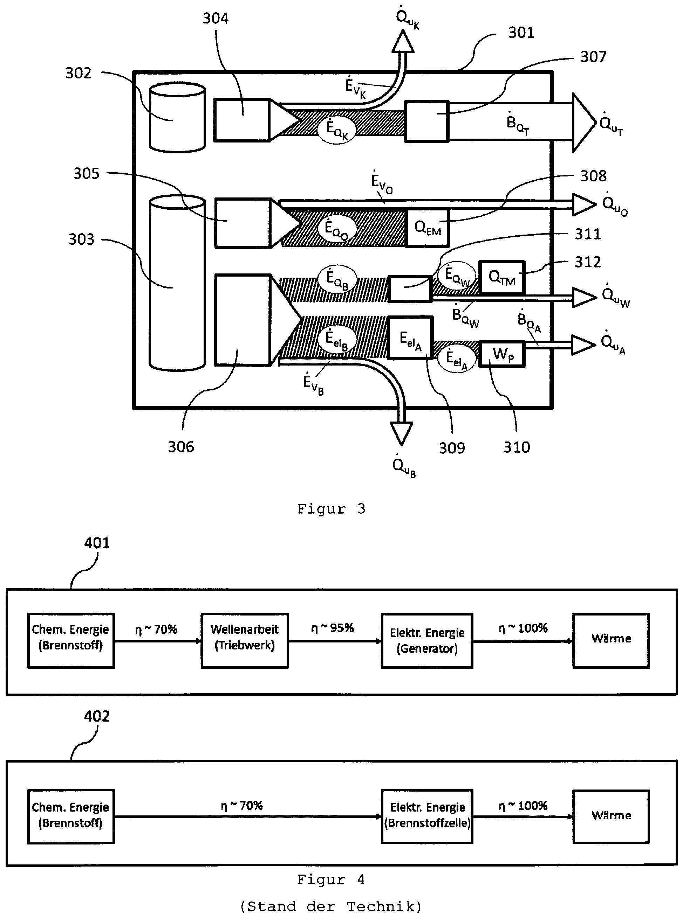

Im Zusammenhang mit diesen bei der Verteilung elektrischer Energie im Flugzeug vorhandenen Nachteilen ergeben sich weitere Nachteile dadurch, dass die gesamte Kette der Energiewandlung unter exergo-ökonomischen Aspekten keinen effizienten Energiewandlungsprozess darstellt, was zur Verdeutlichung beispielhaft in Fig. 4 gezeigt ist: Zur Erzeugung von Wärme in einem Monument in der Flugzeug-Druckkabine wird heutzutage der Brennstoff Kerosin im Triebwerk in Wellenarbeit und über einen mit der Welle verbundenen Generator in elektrische Energie umgewandelt. Diese wird daraufhin zur Wärmeerzeugung, beispielsweise in einem Ofen, verwendet 401. Im diesem Falle ist die Energiewandlungseffizienz vor allem durch den Wirkungsgrad η des Triebwerks begrenzt, welcher nach den Gesetzen der Thermodynamik maximal den theoretischen Carnot-Wirkungsgrad η_{c} erreichen kann. Wird elektrische Energie beispielsweise mittels einer Brennstoffzelle aus einem Brennstoff erzeugt und anschließend in Wärme umgewandelt 402, so liegen die Wirkungsgrade günstiger, und es ergibt sich eine effizientere Energiewandlung.

In Flugzeugen ist beispielsweise das Monument Bordküche bekannt. Dieses Monument, welches für den sicheren und zuverlässigen Betrieb des Flugzeugs keine Bedeutung hat, benötigt unter allen Flugzeug- und Kabinensystemen am meisten Energie. Diese wird dem Monument in Form von elektrischem Strom und manchmal zusätzlich noch in Form eines Kältemittels zur Kühlung (DE 4340317 A1) als Betriebsstoffe zugeführt. Ein Nachteil einer derartigen Energiezufuhr ist es, dass diese entsprechend ausgelegte Versorgungsleitungen erfordert, welche in ihrer Verteilernetzarchitektur nicht flexibel geplant und ausgeführt werden können. Aufgrund des hohen Energiebedarfs beeinflusst dieses Monument weiterhin nachteilig die Auslegung anderer zur Stromerzeugung und zur Kühlung erforderlichen Flugzeugkomponenten sowie die damit verbundenen Verteilernetze.
Um diesem bekannten Nachteil entgegenzuwirken, wurde ein Verfahren zum Bereitstellen von Energie und einer Versorgungseinheit entwickelt (WO 2009/046805 A1), welche die Bauform eines Bordküchen-Trolleys oder Gepäck- bzw. Cargo-Containers aufweist. Dadurch, dass diese Einheit mit einer Brennstoffzelle samt ihren Brennstoffvorräten ausgestattet ist, kann elektrische Energie dezentral zur Verfügung gestellt werden. Sehr nachteilig dabei ist jedoch, dass diese elektrische Energie im Folgeschritt zum Speisen von Heiz und/oder Kühlaggregaten verwendet wird. Im Sinne der oben erläuterten und in Fig. 4 dargestellten Energiewandlungsprozessen lässt dieses Verfahren einen großen Anteil der im Brennstoff enthaltenen chemischen Energie ungenutzt.
Aufgabe der Erfindung ist es daher, ein autarkes Monument so zu gestalten, dass es seinen Betrieb selbst unterhalten kann, wobei mitzuführenden Betriebsstoffe so gewählt sind, dass sich für die zu erfüllenden Funktionen des Monuments effiziente Energiewandlungsprozesse ergeben, und/oder dass sich innerhalb des autarken Monuments ein hoher Gesamtwirkungsgrad der verketteten Energiewandlungsprozesse ergibt.
Diese Aufgabe wird gelöst durch ein autarkes Monument mit den Merkmalen des Anspruchs 1 und durch eine Verwendung mit den Merkmalen des Anspruchs 8.
Erfindungsgemäß ist ein autarkes Monument so gestaltet, dass die für den Betrieb erforderlichen Betriebsstoffe dezentral mitgeführt werden können und jeder Betriebsstoff einen direkten Energiewandlungsprozess ermöglicht. Zur Mitführung bzw. Bereitstellung der Betriebsstoffe sind im Monument Betriebsstoffspeicher vorgesehen, welche bei der Beladung des Flugzeugs am Boden mit den entsprechenden Betriebsstoffvorräten ergänzt werden. Auf diese Weise kann bei einem solchen Monument in der Flugzeug-Druckkabine auf von zentraler Stelle ausgehende Versorgungsnetze und Anschlüsse für Betriebsstoffe verzichtet werden. Damit ist eine gefordert einfache und flexible Installation des Monuments in der Kabine möglich. Das Monument stellt erfindungsgemäß eine autarke und sich selbst versorgende Einheit dar, welche nur durch eine mechanische Befestigung an die Flugzeugstruktur angebunden ist. Soweit erforderlich, kann das Monument Daten kontaktlos über Datenfunk austauschen. Die erfindungsgemäße Lösung ermöglicht einen minimalen Betriebsstoffverbrauch durch geschickte Wahl von Betriebsstoffen zur effizienten Nutzung der in diesen Betriebsstoffen enthaltenen Energieformen und/oder der günstigen Verkettung von Energiewandlungsprozessen zur Erreichung eines hohen Gesamtwirkungsgrades innerhalb eines autarken Monuments, beispielsweise einer Bordküche. Dies führt zu einer positiven Rückwirkung auf die Bilanz an nutzbarer Energie im Gesamtsystem Flugzeug.

Die erfindungsgemäße Lösung ermöglicht insbesondere dann eine optimale Energiebilanz, wenn die benötigten Energieformen aus den mitgeführten Betriebsstoffen mittels exergo-ökonomisch und/oder exergo-ökologisch optimierter Wandlungsprozesse gewinnbar sind bzw. gewonnen werden.

Gemäß einem Aspekt der Erfindung werden für ein Monument, bei dem beispielsweise die Funktionen Heizen, Kühlen, und Beleuchten erforderlich sind, ein Betriebsspeicher für den Brennstoff Methanol und ein weiterer für flüssige Luft als Kühlmittel mitgeführt. Aus dem Betriebsstoff Methanol lässt sich in einem direkten Energiewandlungsprozess wie einem Verbrennungsprozess, z.B. in einem katalytisch betriebenen Ofen, mit hoher Energiewandlungseffizienz (η ∼ 100%) Wärme zum Heizen erzeugen. Derselbe Betriebsstoff Methanol lässt sich auch in einer Brennstoffzelle in elektrische Energie umwandeln und zum Beleuchten des Monuments nutzen. Werden zum Beleuchten des Monuments beispielsweise Leuchtdioden als Leuchtmittel eingesetzt, so kann die Wandlung elektrischer Energie in Licht mit besserer Wandlungseffizienz (η ∼ 25%) erfolgen, als dies mit Glühlampen der Fall ist (η ca. nur 5%), da diese einen höheren Anteil der elektrischen Energie in für Beleuchtungsaufgaben unbrauchbare Wärme umwandeln. Mit dem Betriebsstoff flüssige Luft lässt sich zum Kühlen einzelner Bereiche des Monuments Wärme entziehen. Dabei wird dieser Betriebsstoff in gasförmige Luft umgewandelt und Wärme wird mit hoher Wandlungseffizienz entzogen. Die Verflüssigung der Luft bzw. eines kryogenen Gases kann am Boden außerhalb des Flugzeugs erfolgen. In Bezug auf die im Betriebsstoff flüssige Luft enthaltene Energie ist dieser Wandlungsprozess an Bord eines Flugzeugs im Vergleich zum Entzug von Wärme mittels elektrischer Energie und einer Kältemaschine sehr effizient.

Zur Minimierung der energetischen Verluste in Form von Anergie beim Betrieb des Monuments wird auch eine günstige Verbindung von Energiewandlungsprozessen im autarken Monument betrachtet. Beispielsweise kann beim Einsatz von flüssiger Luft zur Kühlung die entstehende gasförmige Luft bei der Verbrennung eines Brennstoffes zur Erzeugung von Wärme weiter genutzt werden. Durch die geschickte Wahl der Betriebsstoffe, in diesem Falle flüssige Luft und Methanol, die im Monument dezentral mitgeführt werden, und durch die Verbindung der Energiewandlungsprozesse, in diesem Beispiel dem Heizen und Kühlen, werden insgesamt effiziente Energiewandlungsprozesse und eine Unabhängigkeit von den von zentraler Stelle ausgehenden Flugzeugversorgungsnetzen erreicht.

Eine günstige Verbindung von Energiewandlungsprozessen wird gemäß einem Aspekt der Erfindung dadurch erreicht, dass die Energiebedarfe einzelner Subsysteme des autarken Monuments überwacht und geregelt werden, und dass Energiewandler als Subsysteme eingesetzt werden, welche Energie nach einem oder mehreren technischen Prinzipien wandeln können. Die Subsysteme sind hierzu beispielsweise mit einer Sensorik zur Kontrolle des Energieumsatzes ausgestattet. Die von dieser Sensorik erhobenen Daten werden im Monument zentral verarbeitet und dazu genutzt, Energieflüsse zwischen den Subsystemen optimal zu regeln und zu lenken. Vorteilhafterweise werden auch hybride Energiewandler als Subsysteme eingesetzt, welche eine Energieform nach zwei oder mehr technischen Prinzipien erzeugen können. Wenn beispielsweise ein Subsystem Ofen als hybrider Energiewandler mit katalytischer Heizung, elektrischer Heizung und einer Wärmepumpe als hybrider Energiewandler ausgeführt ist, dann besitzt ein solches Subsystem insgesamt drei Möglichkeiten Mahlzeiten zu erwärmen. Beispielsweise kann den Mahlzeiten in diesem Ofen Wärme dadurch zugeführt werden, dass diese katalytisch aus einem Betriebsstoff erzeugt wird, oder dass diese in einer elektrischen Widerstandsheizung aus elektrischer Energie, welche von einem anderen Subsystems geliefert wird, erzeugt wird. Wenn seitens anderer Subsysteme nicht benötigte Wärme zur Verfügung steht, so ist schließlich die Erwärmung der Mahlzeiten auch dadurch möglich, dass eine Wärmepumpe die Wärme anderer Subsysteme dem Ofen zuleitet. Eine günstige Verbindung von Energiewandlungsprozessen wird insgesamt dadurch erreicht, dass die Energiewandler im autarken Monument datentechnisch miteinander kommunizieren, bei Bedarf Energie nach zwei oder mehr Prinzipien wandeln können, und dass die Energieflüsse zwischen den Subsystemen auf Basis der kommunizierten Daten geregelt und gelenkt werden können.

Gemäß einem weiteren Aspekt der Erfindung kann der Gesamtwirkungsgrad eines Monuments durch weitere Techniken zur Energiewandlung verbessert werden. Beispielsweise lässt sich elektrische Energie auf Basis des thermoelektrischen Effekts aus der im Monument umgesetzten Wärme gewinnen. Im Bereich des Fußbodens oder der Sitze lässt sich elektrische Energie zudem auf Basis des piezoelektrischen Effekts aus vom Passagier oder der Besatzung ausgeübter mechanischer Arbeit gewinnen. Diese Verfahren stellen weitere Bausteine für eine exergo-ökonomische Optimierung eines Monumentes dar.

Gemäß einem anderen Aspekt der Erfindung kann auch der Betriebsstoff Wasser im Monument dezentral mitgeführt oder bei der Wärmeerzeugung, beispielsweise durch katalytische Verbrennung von Wasserstoff, im Monument erzeugt werden. Weitere Verfahren zur Entstehung von Wasser bei thermischen oder elektrochemischen Energiewandlungsprozessen sind bekannt und können gemäß einer exergo-ökonomischen und/oder exergo-ökologischen Optimierung im autarken Monument integriert sein.

Sonstige vorteilhafte Ausführungsbeispiele sind Gegenstand weiterer Unteransprüche.

Im Folgenden wird die Erfindung anhand von bevorzugten Ausführungsbeispielen näher beschrieben und unter Bezugnahme auf die beigefügte Zeichnung exemplarisch erläutert. Es sei an dieser Stelle betont, dass die in den Figuren dargestellten Ausführungsformen der Erfindung diese lediglich rein exemplarisch erläutern und insbesondere nicht als Schutzbereichs einschränkend aufgefasst werden dürfen.

Es zeigen im Einzelnen:
- Fig. 1a:: Autarkes Bordküchen-Monument
- Fig. 1b:: einen direkten Energiewandlungsprozess,
- Fig. 2:: Autarkes Ruheabteil der Kabinenbesatzung
- Fig. 3:: Flussdiagramm eines Verfahrens zur effizienten Energiewandlung für ein autarkes Bordküchen-Monument, und
- Fig. 4:: Energiewandlungsketten mit unterschiedlicher Effizienz (Stand der Technik).

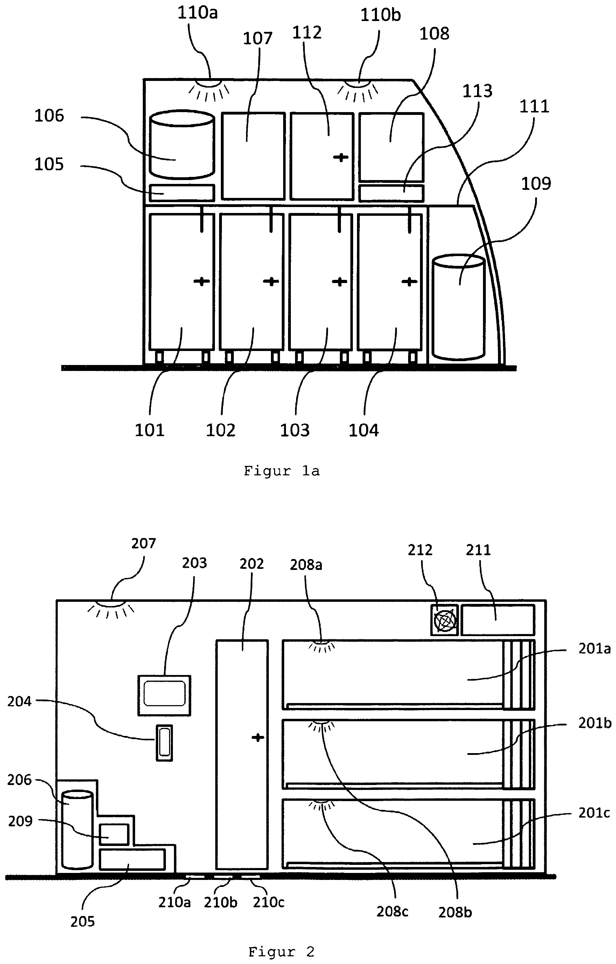

Fig. 1a zeigt ein autarkes Bordküchen-Monument, welches die für einen sich selbst unterhaltenden Betrieb erforderlichen Betriebsstoffe gemäß Anspruch 1 dezentral mitführt. Dieses Monument umfasst die Bordküchen-Trolleys 101, 102, 103, 104 mit standardisierten Abmaßen, jedoch mit unterschiedlicher Funktionalität. Ein gekühlter Bordküchen-Trolley 101, der beispielsweise mit Kaltgetränken bestückt ist, wird von einer Kühleinheit **105** versorgt. Die Kühleinheit 105 ist über eine entsprechend ausgelegte Anschlussleitung (nicht dargestellt) mit einem Betriebsstoffspeicher 106, welcher mit kryogener Luft gefüllt ist, verbunden. Die aus dem Betriebsstoffspeicher 106 entnommene kryogene Luft wird in der Kühleinheit 105 verdampft, also in gasförmige Luft gewandelt. Die für diesen Energiewandlungsprozess benötigte Wärme wird dem Bordküchen-Trolley 101 durch Wärmeleitung entzogen. Ein anderer Teil der Wärme wird einem zweiten Bordküchen-Trolley 102 entzogen, welcher beispielsweise mit vorgefertigten und zu kühlenden Mahlzeiten bestückt ist. Dabei ist es auch denkbar, dass einer der Bordküchen-Trolleys 101, 102, 103, 104 selbst als Betriebsstoffspeicher mit Kühleinheit ausgeführt ist und die anderen Bordküchen-Trolleys versorgt, bzw. dass in jedem der Bordküchen-Trolleys 101, 102, 103, 104 ein eigener Betriebsstoffspeicher- und eine Kühleinheit integriert sind, welche im Bedarfsfall genutzt werden können.

Es ist denkbar, dass ein Bordküchen-Trolley 103 eine integrierte, elektrisch betriebene Presse zur Verdichtung des während des Fluges anfallenden Abfalls besitzt. Die zum kurzzeitigen Betrieb benötigte Leistung an elektrischer Energie liefert ein Akkumulator 107, welcher kontinuierlich durch die in einer Methanol-Brennstoffzelle 108 erzeugte elektrische Energie nachgeladen wird. Diese Methanol-Brennstoffzelle ist über eine Brennstoffleitung (nicht dargestellt) mit dem Betriebsstoffspeicher 109 verbunden, der mit Methanol gefüllt ist. Die von der Brennstoffzelle 108 erzeugte elektrische Energie wird beispielsweise weiterhin dazu genutzt, die Beleuchtungselemente 110a, 110b des Bordküchen-Monuments kontinuierlich mit elektrischer Energie zur Beleuchtung der Arbeitsfläche 111 zu versorgen.

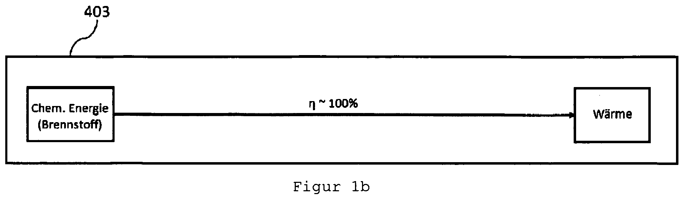

Zum Aufheizen der warmen Mahlzeiten während des Fluges wird ein in dem Bordküchen-Monument installierter, katalytisch betriebener, sogenannter Katalytofen 112 verwendet, welcher ebenfalls aus dem Betriebsstoffspeicher 109 über eine entsprechende Anschlussleitung (nicht dargestellt) versorgt wird. Der Brennstoff aus dem Betriebsstoffspeicher 109 wird dort durch katalytische Verbrennung in Wärme umgesetzt (vgl. Figur 1b direkter Energiewandlungsprozess). Das für diesen Prozess benötigte Oxidationsmittel kann z.B. die Kabinenluft oder vorzugsweise die beim Kühlen anfallende gasförmige Luft aus der Kühleinheit 105 sein.

Der Bordküchen-Trolley 104 kann zum Vorwärmen der gekühlten Speisen dienen, bevor diese im Ofen 112 auf Verzehrtemperatur erhitzt werden. Dazu ist der Trolley 104 mit einem entsprechend ausgeführten Wärmetauscher **113** verbunden. Dieser leitet die beim kontinuierlichen Betrieb der Brennstoffzelle 108 entstehende Wärme in den mit den Mahlzeiten bestückten Trolley 104. Somit werden in vorteilhafter Weise die Brennstoffzelle 108 im Betrieb gekühlt und die Mahlzeiten vorgewärmt.

Fig. 2 zeigt als Monument ein autarkes Ruheabteil der Kabinenbesatzung welches die für einen sich selbst unterhaltenden Betrieb erforderlichen Betriebsstoffe gemäß Anspruch 1 dezentral mitführt. Das Ruheabteil ist mit mehreren Schlafkojen 201a, 201b, 201c für die Kabinenbesatzung ausgestattet. Für persönliche Gegenstände steht jedem Mitglied der Kabinenbesatzung ein Stauschrank 202 zur Verfügung. Das autarke Ruheabteil verfügt über eine Bedienstation mit Bildschirm 203 zur Überwachung und Steuerung der Kabinensysteme sowie über ein Bordtelefon 204, die beide über eine drahtlose Funkverbindung mit dem Kabinennetzwerk kommunizieren.

In diesem Beispiel liefert eine Wasserstoff-Brennstoffzelle 205, welche sich unter dem Treppenaufgang des Ruheabteils befindet, die zum Betrieb notwendige elektrische Energie. Sie wird dazu aus einem Betriebsstoffspeicher 206, der in Form von einfach zu wechselnden Druckzylindern ausgeführt ist, über entsprechend ausgelegte Anschlussleitungen (nicht dargestellt) mit Wasserstoff und Sauerstoff versorgt. Neben der Bedienstation mit Bildschirm 203 und dem Bordtelefon 204 wird auch das Beleuchtungssystem **207** von der Brennstoffzelle 205 mit der notwendigen Energie versorgt. Zudem wird das in der Brennstoffzelle entstehende Wasser zur Luftbefeuchtung im Ruheabteil genutzt. Die Leseleuchten 208a, 208b, 208c der Schlafkojen 201a, 201b, 201c werden aus einem Akkumulator 209 mit elektrischer Energie versorgt. Dieser wird zum einen durch in den Matratzen eingearbeitete thermoelektrische Energiewandler (nicht dargestellt) nachgeladen, welche die Körperwärme des darauf ruhenden Besatzungsmitglieds in elektrischen Strom wandeln (direkter Energiewandlungsprozess). Zum anderen wird der Akkumulator 209 durch im Fußboden eingearbeitete piezoelektrische Elemente 210a, 210b, 210c nachgeladen, welche den durch Schritte ausgeübte mechanische Arbeit auf diese Piezoelemente in elektrischen Strom umwandeln. Weiterhin kann das Auf- und Nachladen dieses Akkumulators 209 durch die Brennstoffzelleneinheit 205 erfolgen.

Ein Luftaufbereiter 211 liefert kontinuierlich aufbereitete Atemluft, welche von einem angeschlossenen Luftverteiler 212 gleichmäßig in dem autarken Ruheabteil verteilt wird. Die elektrische Versorgung dieses Systems erfolgt ebenfalls durch die Brennstoffzelleneinheit 205. Der Austausch von Kohlendioxyd durch Sauerstoff in der Atemluft des Ruheabteils beruht auf bekannten chemischen Prinzipien mittels Chemikalien, welche in einem Betriebsspeicher im Luftaufbereiter 211 mitgeführt werden. Die Temperierung kann aufgrund dieser Luftaufbereitungsmethode exergo-ökonomisch durchgeführt werden. Das autarke Monument benötigt somit zum Betrieb für Datentechnik, Elektrik und Luftaufbereitung keine fest mit dem Monument verbundenen Versorgungsleitungen.

Fig. 3 zeigt das Flussdiagramm eines Verfahrens zur effizienten Energiewandlung innerhalb der vordefinierten Systemgrenze **301** eines erfindungsgemäßen Monuments, beispielsweise des in Fig. 1a beschriebenen autarken Bordküchen-Monuments. Die in der Figur dargestellten Energieströme sind dabei als qualitativ zu betrachten und dienen lediglich der Verdeutlichung der einzelnen Schritte des Verfahrens.

Energie besteht nach dem zweiten Hauptsatz der Thermodynamik aus einem als Exergie bezeichneten Anteil, welcher sich vollständig in Arbeit umwandeln lässt, und einem als Anergie bezeichneten Anteil, welcher sich nicht in Arbeit umwandeln lässt. Das im Folgenden beschrieben Verfahren umfasst somit Schritte der effizienten Energiewandlung unter Zuhilfenahme der Exergie-Analyse zur Optimierung. Dabei wird die produzierte Menge an nutzbarer Exergie maximiert und der Anteil der nicht nutzbaren Anergie entsprechend minimiert.

Das Verfahren umfasst in einem ersten Schritt das Bereitstellen von zwei Betriebsstoffen in den dafür vorgesehenen Betriebsstoffspeichern 302, 303. Am Beispiel des Bordküchen-Monuments repräsentiert der Betriebsstoffspeicher 302 einen Tank mit kryogener Luft und der Betriebsstoffspeicher 303 einen Tank mit Methanol. Im zweiten Schritt werden drei an die jeweiligen Betriebsstoffspeicher angeschlossene Energiewandler 304, 305, 306 mit den notwendigen Betriebsstoffen über entsprechend ausgeführte Anschlussleitungen (nicht dargestellt) versorgt. Im angeführten Beispiel erzeugt im dritten Schritt eine Kühleinheit 304 aus dem zugeführten Betriebsstoff den Exergiestrom *Ė_{Q_{K}}* sowie den im System nicht weiter nutzbaren Anergiestrom *Ė_{V_{K}}*, welcher aus den Verlusten bei der Energiewandlung in der Kühleinheit 304 entsteht. *Ė_{Q_{K}}* stellt den Exergiestrom dar, der benötigt wird, um eine entsprechende Wärmemenge, die dem Anergiestrom *Ḃ_{Q_{T}}* entspricht, aus dem zu kühlenden Bordküchen-Trolley 307 abzuführen. Alle Schritte, Betriebsstoffe und Energiewandler sind in dieser Prozesskette erfindungsgemäß so gewählt, dass der Anergiestrom *Ė_{V_{K}}* in Bezug auf die durch den Prozess zu erfüllende Aufgabe minimiert ist.

Innerhalb der Systemgrenze 301 erzeugt an anderer Stelle ein Ofen 305 aus vom Betriebsstoffspeicher 303 zugeführtem Methanol mittels katalytischer Verbrennung einen Wärmestrom. Dieser wird in Form des nutzbaren Exergiestroms *Ė_{Q_{O}}* in die in den Ofen-Einschüben 308 gelagerten Mahlzeiten transportiert und dort in Form der Wärme *Q_{EM}* gespeichert. Aufgrund von Verlusten bei diesem Transportprozess entsteht der im System nicht weiter nutzbare Anergiestrom *Ė_{V_{O}}.*

Die ebenfalls aus dem Methanoltank **303** versorgte Brennstoffzelle 306 erzeugt den Exergiestrom *Ė_{el_{B}}* in Form elektrischen Stroms sowie den Anergiestrom *Ė_{V_{B}},* welcher durch Verluste der Brennstoffzelle 306 bei der Energiewandlung entsteht, z.B. durch ungewollte Diffusion des Brennstoffs durch die Brennstoffzellenmembran oder durch ohmsche Verluste. Der Exergiestrom *Ė_{el_{B}}* wird nun in einem Akkumulator **309** in Form von elektrochemischer Energie *E_{el_{A}}* gespeichert. Ein Teil dieser Energie *E_{el_{A}}* wird anschließend in Form des Exergiestroms *Ė_{el_{A}}* einer elektrisch betriebenen Abfallpresse 310 zugeführt und leistet die zum Verdichten des während des Fluges anfallenden Abfalls benötigte plastische Verformungsarbeit *W_{P}.* Dabei entsteht auch nicht nutzbare Wärme, die durch den Anergiestrom *Ḃ_{Q_{A}}* repräsentiert wird. Der andere Teil der im Akkumulator 309 gespeicherten elektrochemischen Energie steht beispielsweise für Anwendungen, wie dem Betrieb der Leuchtmittel des Bordküchen-Monuments (nicht dargestellt), zur Verfügung.

Die während des Betriebs der Brennstoffzelle **306** anfallende Wärme wird einem Wärmetauscher 311 in Form des Exergiestroms *Ė_{Q_{B}}* zugeführt. Dieser wird im Wärmetauscher **311** in den Exergiestrom *Ė_{Q_{W}}* und den im System nicht weiter nutzbaren Anergiestrom *Ė_{Q_{W}}* aufgeteilt. Der Exergiestrom *Ė_{Q_{W}}* wird anschließend in den Bordküchen-Trolley 312 transportiert und in den darin befindlichen Mahlzeiten in Form der Wärme *Q_{TM}* gespeichert.

Sämtliche Anergieströme, welche die Systemgrenze **301** des Bordküchen-Monuments überschreiten, bestehen aus im System nicht weiter nutzbarer Wärmeenergie. Sie können zum Gesamtwärmestrom *Q̇ᵤ* zusammengefasst werden, welcher von dem Bordküchen-Monument an die unmittelbare Umgebung abgegeben wird. *Q̇ᵤ* setzt sich zusammen aus dem Verlustwärmestrom *Q̇_{u_{K}}* der Kühleinheit 304, dem aus dem Bordküchen-Trolley 307 abgeführten Wärmestrom *Q̇*_{*u*_{T}} , dem Verlustwärmestrom *Q̇*_{*u_{O}*} des Ofens 305, dem Verlustwärmestrom *Q̇_{u_{B}}* der Brennstoffzelle 306, dem Wärmestrom *Q̇_{u_{A}}* der Abfallpresse 309 und dem Wärmestrom *Q̇*_{*u_{W}*} des Wärmetauschers **311.** Ein erfindungsgemäß autarkes Monument ist gemäß Anspruch 2 dahingehend ausgelegt, dass dieser Gesamtwärmestrom *Q̇ᵤ* minimiert ist.

Bei modernen Verkehrsflugzeugen ist eine modulare Gestaltung der Kabine gewünscht, welche eine flexible und einfache Installation der Kabinenmonumente zulässt. Für eine beliebige Platzierung sowie einen einfachen Ein- und Ausbau von Monumenten in der Kabine stellt die bislang im Flugzeug von zentralen Stellen ausgehende, streng hierarchisch aufgebaute Betriebsstoffversorgung eine große Hürde dar, weil Versorgungsleitungen und Anschlüsse nicht uneingeschränkt flexibel geplant, installiert und mit dem Monument verbunden werden können.

Die Erfindung betrifft daher ein autarkes Monument in einer Flugzeug-Druckkabine, welches dadurch dezentral mit erforderlichen Betriebsstoffen versorgt wird, dass diese in Betriebsstoffspeichern im Monument mitgeführt werden. Darüber hinaus betrifft die Erfindung ein Verfahren zur effizienten Energiewandlung innerhalb dieses autarken Monuments. Die Effizienz wird dadurch erreicht, dass die Energiewandlung ausgehend von den Betriebsstoffen unter exergo-ökonomischen und/oder exergo-ökologischen Aspekten optimiert ist, und dass bei mehreren Energiewandlungsprozessen, diese aufeinander abgestimmt sind.

In Verbindung mit bekannten Methoden zur Flexibilisierung der Monument-Installation, die z.B. durch mechanische Flexibilisierung bei der Befestigung oder Datenverbindung per Funk verbessert werden kann, wird durch die Erfindung ein hinsichtlich der Betriebsstoffversorgung vollständig autarkes, und damit beliebig platzierbares sowie einfach ein- und auszubauendes Monument erreicht, welches sich durch exergo-ökonomisch und/oder exergo-ökologisch optimierte Energiewandlungsprozesse selbst versorgt und unterhält.

**Bezugszeichenliste**

| | | | | | |
|---|---|---|---|---|---|
| 101 | gekühlter Bordküchen-Trolley | 201 | Schlafkoje | 301 | Systemgrenze |
| 102 | gekühlter Bordküchen-Trolley | 202 | Stauschank | 302 | Betriebsstoffspeicher |
| 103 | elektrisch betriebener Bordküchen-Trolley | 203 | Bedienstation mit Bildschirm | 303 | Betriebsstoffspeicher |
| 104 | wärmeversorgter Bordküchen-Trolley | 204 | Bordtelefon | 304 | Kühleinheit |
| 105 | Kühleinheit | 205 | Brennstoffzelle | 305 | Ofen |
| 106 | Betriebsstoffspeicher | 206 | Betriebsstoffspeicher | 306 | Brennstoffzelle |
| 107 | Akkumulator | 207 | Beleuchtungssystem | 307 | Bordküchen-Trolley |
| 108 | Brennstoffzelle | 208 | Leseleuchte | 308 | Ofen-Einschübe |
| 109 | Betriebsstoffspeicher | 209 | Akkumulator | 309 | Akkumulator |
| 110 | Beleuchtungselement | 210 | Piezo-elektrisches Element | 310 | Abfallpresse |
| 111 | Arbeitsfläche | 211 | Luftaufbereiter | 311 | Wärmetauscher |
| 112 | Katalytofen | 212 | Luftverteiler | 312 | Bordküchen-Trolley |
| 113 | Wärmetauscher | | | | |
| 401 | Energiewandlungskette 1 | | | | |
| 402 | Energiewandlungskette 2 | | | | |
| 403 | Energiewandlungskette 3 | | | | |

## Patentansprüche

1. Autarkes in einer Flugzeug-Druckkabine einbaubares Monument, aufweisend:
- mehrere Betriebsstoffspeicher für einen sich selbst unterhaltenden Betrieb (109; 206; 302, 303) zur Bereitstellung von Betriebsstoffen; und
- mehrere Energiewandler (304, 305, 306);
wobei jeder Betriebsstoff einen direkten Energiewandlungsprozess über zumindest einen Energiewandler und somit einen Exergiestrom für das selbst versorgende Monument ermöglicht;
wobei die Betriebsstoffspeicher (302, 303) einen Tank mit kryogener Luft und einen Tank mit Methanol aufweisen;
wobei die Energiewandler (304, 305, 306) eine Kühleinheit, einen Ofen und eine Brennstoffzelle aufweisen;
wobei die Kühleinheit an dem mit kryogener Luft gefüllten Tank angeschlossen und mit kryogener Luft versorgt ist;
wobei der Ofen und die Brennstoffzelle an dem mit Methanol gefüllten Tank angeschlossen und mit Methanol versorgt sind;
wobei die Betriebsstoffe und Energiewandler so gewählt sind, dass ein Anergiestrom minimiert ist.

2. Autarkes Monument nach Anspruch 1, wobei die zum Betrieb des Monuments benötigten Energieformen aus den mitgeführten Betriebsstoffen mittels exergo-ökonomisch und/oder exergo-ökologisch optimierter Wandlungsprozesse gewinnbar sind.

3. Autarkes Monument nach Anspruch 1 und 2, wobei Energiebedarfe einzelner Subsysteme des autarken Monuments überwacht und geregelt werden, und Energiewandler (112; 210; 304, 305, 306) als Subsysteme eingesetzt werden, welche Energie nach einem oder mehreren technischen Prinzipien wandeln.

4. Autarkes Monument nach Anspruch 2 oder 3, wobei mehrere Energiewandlungsprozesse miteinander verbunden sind.

5. Autarkes Monument nach einem der Ansprüche 1 bis 4, welches Energiewandler (112; 210; 304, 305, 306) und Energiespeicher (107; 209; 309) enthalt, die auf Basis des thermoelektrischen bzw. piezoelektrischen Effekts aus der im Monument umgesetzten Wärme bzw. aus von Personen oder Besatzung ausgeübter mechanischer Arbeit, Wärme oder mechanische Energie in elektrische Energie wandeln und speichern und bei Bedarf zu einem anderen Zeitpunkt wieder zur Verfügung stellen können.

6. Autarkes Monument nach einem der vorhergehenden Ansprüche, wobei es sich um eine Bordküche handelt.

7. Autarkes Monument nach Anspruch 6, wobei die Bordküche den Ofen (112) mit einer katalytischen Verbrennung aufweist.

8. Verwendung eines autarken Monuments nach einem der Anspruche 1 bis 7 in einer Flugzeug-Druckkabine.

9. Flugzeug mit einem autarken Monument gemäß einem der Anspruche 1 bis 7.

## Claims

1. Autonomous monument that can be installed in a pressurized aircraft cabin, comprising:
- a number of operating medium reservoirs for self-sufficient operation (109; 206; 302, 303) for supplying operating media; and
- a number of energy converters (304, 305, 306); wherein each operating medium allows a direct energy conversion process by means of at least one energy converter and consequently an exergy flow for the self-supplying monument;
wherein the operating medium reservoirs (302, 303) comprise a tank with cryogenic air and a tank with methanol;
wherein the energy converters (304, 305, 306) comprise a cooling unit, an oven and a fuel cell;
wherein the cooling unit is connected to the tank filled with cryogenic air and is supplied with cryogenic air; wherein the oven and the fuel cell are connected to the tank filled with methanol and are supplied with methanol; wherein the operating media and energy converters are chosen such that an anergy flow is minimized.

2. Autonomous monument according to Claim 1, wherein the forms of energy required for operating the monument can be obtained from the operating media taken along by means of exergo-economically and/or exergo-ecologically optimized conversion processes.

3. Autonomous monument according to Claims 1 and 2, wherein energy requirements of individual subsystems of the autonomous monument are monitored and controlled, and energy converters (112; 210; 304, 305, 306) are used as subsystems which convert energy on the basis of one or more technical principles.

4. Autonomous monument according to Claim 2 or 3, wherein a number of energy conversion processes are combined with one another.

5. Autonomous monument according to one of Claims 1 to 4, which includes energy converters (112; 210; 304, 305, 306) and energy stores (107; 209; 309) which, on the basis of the thermoelectric or piezoelectric effect, can convert heat or mechanical energy from the heat converted in the monument or from mechanical work exerted by persons or crew into electrical energy and store it and make it available again when required at another point in time.

6. Autonomous monument according to one of the preceding claims, wherein it is an on-board galley.

7. Autonomous monument according to Claim 6, wherein the on-board galley comprises the oven (112) with catalytic combustion.

8. Use of an autonomous monument according to one of Claims 1 to 7 in a pressurized aircraft cabin.

9. Aircraft with an autonomous monument according to one of Claims 1 to 7.

## Revendications

1. Ensemble autonome pouvant être installé dans une cabine pressurisée d'un avion, présentant :
- plusieurs accumulateurs de combustible pour un fonctionnement indépendant (109 ; 206 ; 302, 303) pour fournir des combustibles ; et
- plusieurs convertisseurs d'énergie (304, 305, 306) ;
chaque combustible permettant un processus de conversion d'énergie directe par le biais d'au moins un convertisseur d'énergie et par conséquent un courant d'exergie pour l'ensemble à alimentation indépendante ;
les accumulateurs de combustible (302, 303) présentant un réservoir avec de l'air cryogénique et un réservoir avec du méthanol ;
les convertisseurs d'énergie (304, 305, 306) présentant une unité de réfrigération, un four et une pile à combustible ;
l'unité de réfrigération étant raccordée au réservoir rempli d'air cryogénique et étant alimentée en air cryogénique ;
le four et la pile à combustible étant raccordés au réservoir rempli de méthanol et étant alimentés en méthanol ;
les combustibles et les convertisseurs d'énergie étant choisis de telle sorte qu'un flux anergique soit minimisé.

2. Ensemble autonome selon la revendication 1, dans lequel les formes d'énergie nécessaires pour le fonctionnement de l'ensemble peuvent être obtenues à partir des combustibles embarqués au moyen de processus de conversion optimisés en exergie du point de vue économique et/ou écologique.

3. Ensemble autonome selon les revendications 1 et 2, dans lequel les besoins énergétiques de sous-système individuels de l'ensemble autonome sont surveillés et régulés et des convertisseurs d'énergie (112 ; 210 ; 304, 305, 306) sont utilisés en tant que sous-systèmes qui convertissent l'énergie selon l'un quelconque ou plusieurs des principes techniques.

4. Ensemble autonome selon la revendication 2 ou 3, dans lequel plusieurs processus de conversion d'énergie sont associés les uns aux autres.

5. Ensemble autonome selon l'une quelconque des revendications 1 à 4, qui contient des convertisseurs d'énergie (112 ; 210 ; 304, 305, 306) et des accumulateurs d'énergie (107 ; 209 ; 309) qui, sur la base de l'effet thermoélectrique ou piézoélectrique, convertissent en énergie électrique et accumulent de la chaleur ou de l'énergie mécanique à partir de la chaleur générée dans l'ensemble ou à partir du travail mécanique exercé par les personnes ou l'équipage et peuvent à nouveau la fournir au besoin à un autre instant.

6. Ensemble autonome selon l'une quelconque des revendications précédentes, celui-ci étant une cuisine de bord.

7. Ensemble autonome selon la revendication 6, dans lequel la cuisine de bord présente le four (112) avec une combustion catalytique.

8. Utilisation d'un ensemble autonome selon l'une quelconque des revendications 1 à 7 dans une cabine pressurisée d'un avion.

9. Avion comprenant un ensemble autonome selon l'une quelconque des revendications 1 à 7.
